# EUROPEAN PATENT APPLICATION

(11) **EP 2 309 728 A1**
(43) Date of publication of application: **13.04.2011**
(21) Application number: 10175557.7
(22) Date of filing: 07.09.2010
(51) Int. Cl.: H04N 5/44, H04N 5/445

(54) **Program information display control apparatus and program information display control method**

(30) Priority: 15.09.2009 JP 2009213616
(71) Applicant: Kabushiki Kaisha Toshiba, Tokyo 105-8001 (JP)
(72) Inventor: Kimura, Takahiro, Tokyo 105-8001 (JP)
(74) Representative: HOFFMANN EITLE

(57) **Abstract**

According to one embodiment, a display control apparatus includes a receiver (102, 103), a display information output module (113), and a display controller (110). The receiver is configured to receive program information on each channel. The display information output module is configured to output first display information for making a list display of a first amount of program information on each channel corresponding to a first time range or second display information for making a list display of a second amount of program information on each channel corresponding to a second time range. The display controller is configured to control the display information output module so that the display information output module outputs the first display information on the basis of a program information list display instruction and switch the output of the first display information from the display information output module to the output of the second display information on the basis of a time range switching instruction.

## Description

Embodiments described herein relate generally to a program information display control apparatus and a program information display control method which receive program information on each channel and control the display of program information.

In recent years, recording and reproducing apparatuses capable of recording and reproducing digital television broadcasting have been widely used. For example, a recording and reproducing apparatus records digital television broadcasting with an HDD or a DVD. The storage capacity of an information storage medium, such as an HDD, is increasing year by year. Accordingly, recording and reproducing apparatuses using those information storage mediums and television receivers with a recording function using the information storage mediums can record a large number of programs.

Furthermore, the recording and reproducing apparatuses and television receivers can acquire service information from digital television broadcast signals and control the display of a program list on the basis of the service information or display the program list. For example, Jpn. Pat. Appln. KOKAI Publication No. 2008-219162 has disclosed a program list display apparatus configured to display a 6-channel, 5-hour program list. In addition, the program list display apparatus can display a time and date specify switching screen. The time and date specify switching screen is composed of a date axis on which nine dates including the present are plotted horizontally and a time axis on which 24 hours are plotted at 1-hour intervals vertically. On the basis of the operation of selecting a specific area on the time and date specify switching screen, the program list display apparatus can display a program list for the time and date corresponding to the selected specific area.

However, the program list display apparatus can display only either a program list including 6-channel 5-hour program information or a time and date specify switching screen including no program information. Accordingly, although it is easy to search for a program in the near future (e.g., within 5 hours), it is difficult to search for a program in a little distant future (e.g., beyond 6 hours). That is, although a program list displayed by the program list display apparatus includes relatively detailed program information within 5 hours, the user cannot ascertain future program information beyond 6 hours from the program list. The time and date specify switching screen has been configured with a date axis for 9 days and a time axis for 24 hours. However, the user cannot ascertain program information from the time and date specify switching screen.

A general architecture that implements the various feature of the embodiments will now be described with reference to the drawings. The drawings and the associated descriptions are provided to illustrate the embodiments and not to limit the scope of the invention.

FIG. 1 schematically shows the configuration of a digital television broadcast receiver (or a program information display control apparatus) according to an embodiment;
FIG. 2 shows an example of the display of a first program list;
FIG. 3 shows an example of the display of a second program list;
FIG. 4 shows an example of the display of a third program list; and
FIG. 5 shows an example of the display of a fourth program list.

Various embodiments will be described hereinafter with reference to the accompanying drawings.

In general, according to one embodiment, a display control apparatus includes a receiver, a display information output module, and a display controller. The receiver is configured to receive program information on each channel. The display information output module is configured to output first display information for making a list display of a first amount of program information on each channel corresponding to a first time range or second display information for making a list display of a second amount of program information on each channel corresponding to a second time range. The display controller is configured to control the display information output module so that the display information output module outputs the first display information on the basis of a program information list display instruction and switch the output of the first display information from the display information output module to the output of the second display information on the basis of a time range switching instruction.

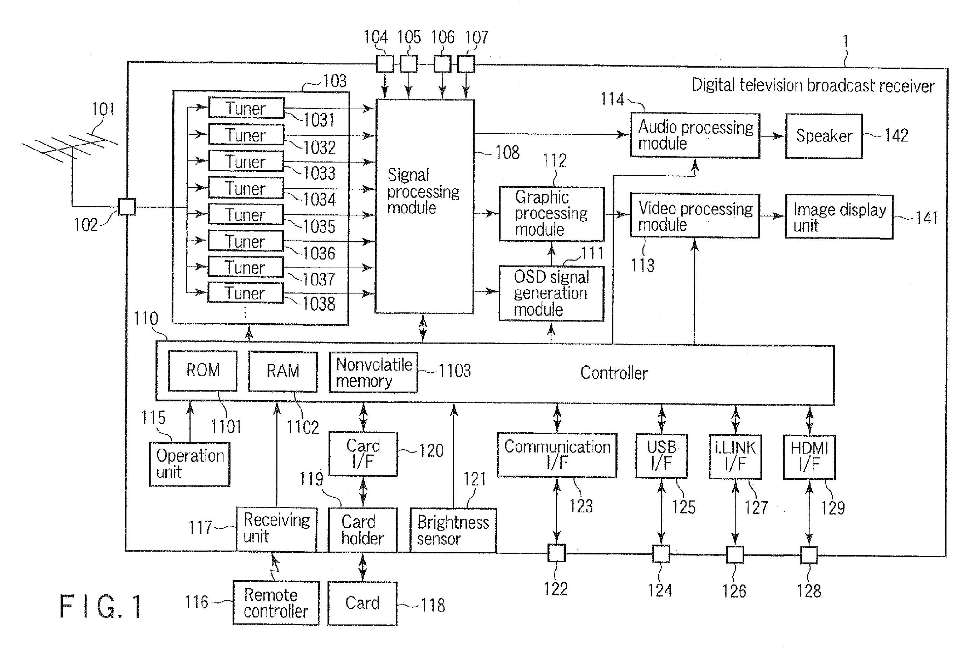

FIG. 1 schematically shows the configuration of a digital television broadcast receiver (or an image receiving apparatus) according to an embodiment. As shown in FIG. 1, the digital television broadcast receiver 1 comprises an antenna 101, an input terminal 102, a tuner unit 103, external input terminals 104 to 107, a signal processing module 108, a controller 110, an OSD signal generation module 111, a graphic processing module 112, a video processing module 113, an audio processing module 114, an operation unit 115, a receiving unit 117, a card holder 119, a card interface 120, a brightness sensor 121, a LAN terminal 122, a communication interface 123, a USB terminal 124, a USB interface 125, an iLINK terminal 126, an iLINK interface 127, an HDMI terminal 128, an HDMI interface 129, an image display unit 141, and a speaker 142.

The tuner unit 103 includes not only terrestrial digital television broadcast tuners 1031 to 1038 but also a digital direct-broadcasting-by-satellite (DBS) television tuner. In the embodiment, the display (display control) of a terrestrial digital television program list corresponding to terrestrial digital television broadcasting will be explained and the display (display control) of a program list corresponding to digital DBS television will be omitted. However, the embodiment may be applied to the display (display control) of a program list corresponding to digital DBS television.

In the embodiment, a case where the digital television broadcast receiver 1 includes the image display unit 141 and speaker 142 as shown in FIG. 1 will be explained. That is, a case where a program information display control apparatus of the embodiment includes the image display unit 141 and speaker 142 will be explained. However, the program information display control apparatus is not limited to such a configuration. For example, the program information display control apparatus may be configured to include neither the image display unit 141 nor speaker 142. In other words, the program information display control apparatus may be configured to connect with the image display unit 141 and speaker 142 via connection means, such as HDMI.

Hereinafter, the digital television broadcast receiver 1 will be explained in detail.

The terrestrial digital television broadcast signal received by the antenna 101 for receiving terrestrial broadcasting is supplied to the tuners 1031 to 1038 via the input terminal 102. The terrestrial digital television broadcast signal processing modules of the tuners 1031 to 1038 select digital television broadcast signals on desired channels. The digital television broadcast signals selected by the tuners 1031 to 1038 are supplied to an orthogonal frequency division multiplexing (OFDM) demodulation module, which demodulates the broadcast signals into digital video signals and audio signals and then outputs the video and audio signals to the signal processing module 108.

The signal processing module 108 then selectively subjects the digital video and audio signals supplied from the OFDM demodulation module to a specific digital signal process and outputs the resulting signals to the graphic processing module 112 and audio processing module 114.

To the signal processing module 108, for example, four input terminals 104 to 107 are connected. The input terminals 104 to 107 enable analog video and audio signals to be input from outside the digital television broadcast receiver 1.

The signal processing module 108 selectively digitizes the analog video and audio signals supplied from the input terminals 104 to 107, subjects the digitized video and audio signals to a specific digital signal process, and then outputs the resulting signals to the graphic processing module 112 and audio processing module 114.

The graphic processing module 112 has the function of superimposing an on-screen display (OSD) signal generated by an OSD signal generation module 111 onto the digital video signal supplied from the signal processing module 108. The graphic processing module 112 can not only selectively output the output video signal from the signal processing module 108 and the output OSD signal from the OSD signal generation module 111 but also combine the two outputs so that each of them may constitute half of the screen and output the resulting signal.

The digital video signal output from the graphic processing module 112 is supplied to the video processing module 113. The video signal processed by the video processing module 113 is supplied to the image display unit 141. The image display unit 141 displays an image based on the video signal.

The audio processing module 114 converts the input digital audio signal into an analog audio signal in a format that can be reproduced by the speaker 142 and outputs the resulting signal to the speaker 142, which then reproduces sound.

In the digital television broadcast receiver 1, all of the operations, including the aforementioned various receiving operations, are comprehensively controlled by the controller 110. The controller 110, which comprises a central processing unit (CPU), receives operating information (various instructions) from the operation unit 115 or operating information (various instructions) sent from a remote controller 116 and received via a light-receiving unit 117 and controls the individual modules and others so that the nature of the operation may be reflected.

In addition, the controller 110 further comprises a read-only memory (ROM) 1101 which stores a control program executed by the CPU, a random access memory (RAM) 1102 which provides the CPU with a work area, and a nonvolatile memory 1103 in which various items of setting data and control data are stored.

The controller 110 is connected via a card interface 120 to a card holder 119 in which a memory card 118 can be installed. This enables the controller 110 to exchange data with the memory card 118 installed in the card holder 119 via the card interface 120.

The controller 110 is further connected to the LAN terminal 122 via the communication interface 122. This enables the controller 110 to exchange data via the communication interface 123 with a LAN-compatible device connected to the LAN terminal 21. In this case, the controller 110, which has a dynamic host configuration protocol (DHCP) server function, allocates an Internet protocol (IP) address to a LAN-compatible device connected to the LAN terminal 122 and controls the device.

The controller 110 is further connected to the HDMI terminal 128 via the HDMI interface 129. This enables the controller 110 to exchange data via the HDMI interface 129 with an HDMI-compatible device connected to the HDMI terminal 128.

The controller 110 is further connected to the USB terminal 124 via the USB interface 125. This enables the controller 110 to exchange data via the USB interface 125 with a USB-compatible device connected to the USB terminal 124.

The controller 110 is further connected to the iLINK terminal 126 via the iLINK interface 127. This enables the controller 110 to exchange data via the iLINK interface 127 with an iLINK-compatible device connected to the iLINK terminal 126.

Moreover, the controller 110 is configured to receive a brightness sense signal from the brightness sensor 121. This enables the controller 110 to control the brightness or the like of an image and a backlight on the basis of the brightness sense signal.

Furthermore, the controller 110 can control a video recording operation to record a broadcast signal selected and decrypted by the tuner unit 103 on an HDD or the like connected via the LAN terminal 122 or USB terminal 124. Since the tuner unit 103 includes tuners, it can record or display programs on channels. For example, the digital television broadcast receiver 1 can record all the programs for one week on channels with high-definition image quality. Such video recording is referred to as multiple simultaneous video recording. To realize the multiple simultaneous video recording, the digital television broadcast receiver 1 includes tuners corresponding to channels and further includes card slots into which decryption cards corresponding to the tuners are to be inserted in order to deal with encrypted broadcasting.

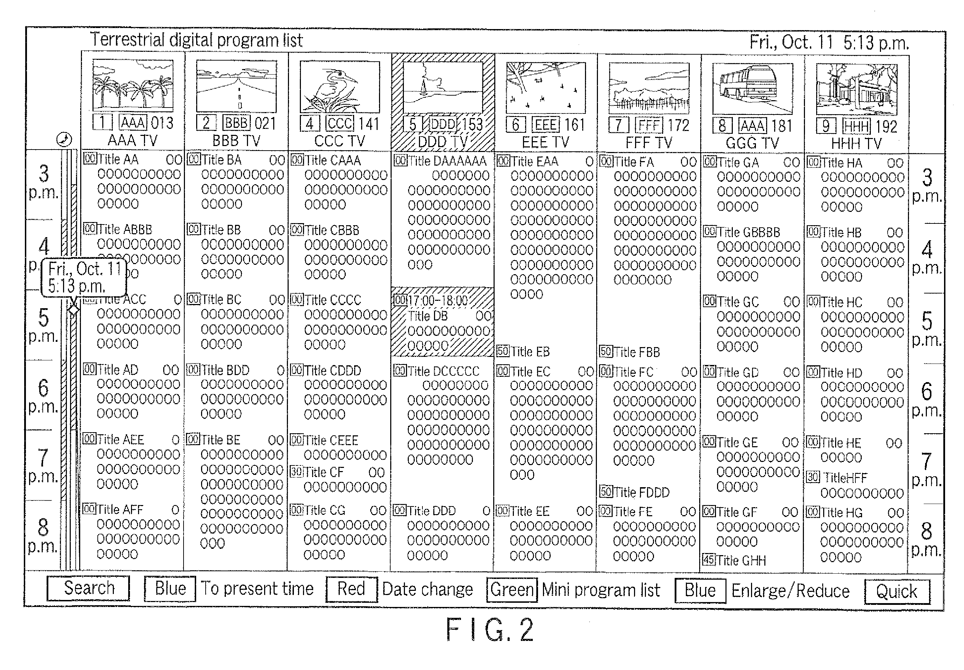

Next, display control of a program list will be explained with reference to FIGS. 2 to 5. The digital television broadcast receiver 1 receives a terrestrial digital television broadcast signal via the antenna 101 and the signal processing module can detect service information from the received signal. The service information includes, for example, program information for 8 days on each channel.

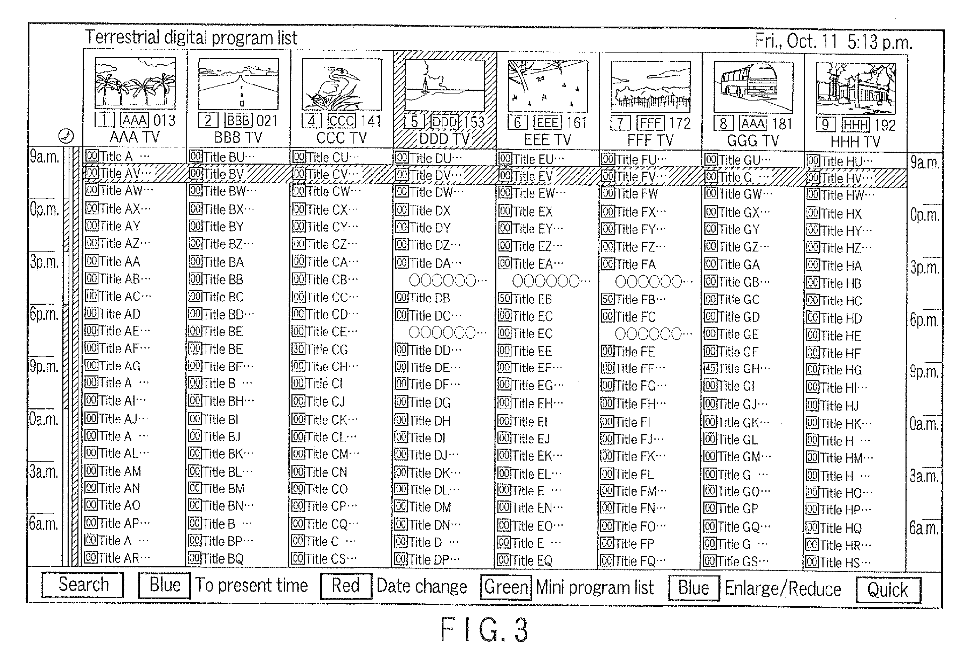

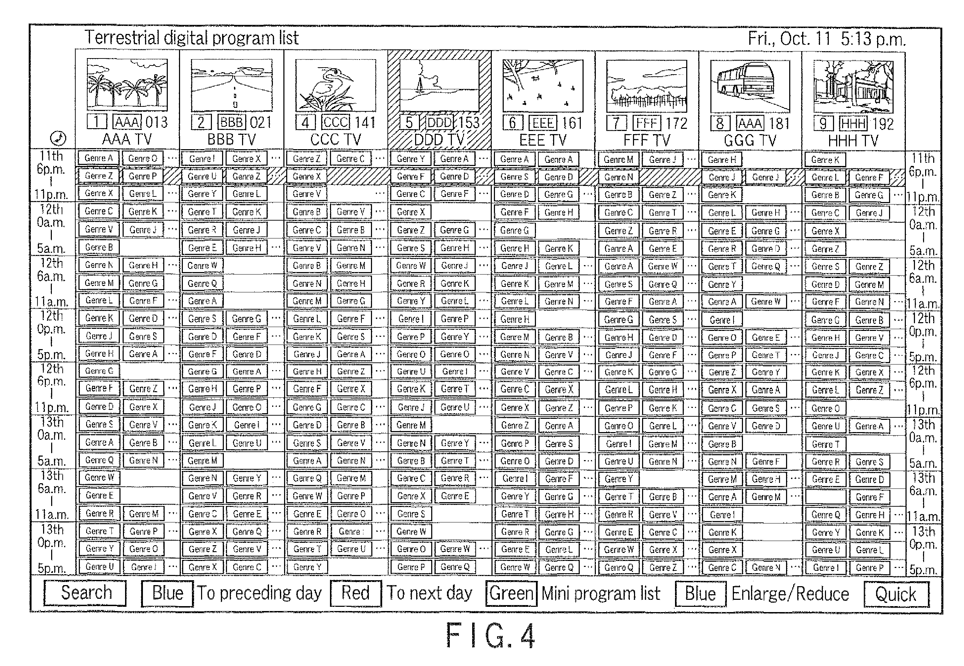

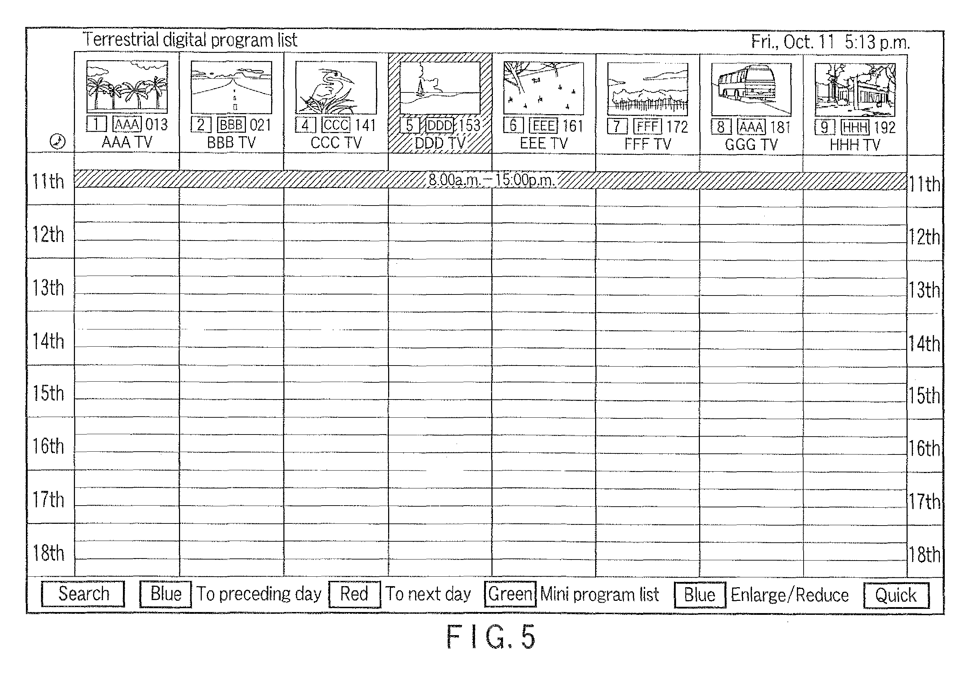

On the basis of program information on each channel, an on-screen display (OSD) signal generation module 111 generates an OSD signal (first display information) to display a first program list shown in, for example, FIG. 2. Alternatively, on the basis of program information on each channel, the OSD signal generation module 111 generates an OSD signal (second display information) to display a second program list shown in, for example, FIG. 3. Alternatively, on the basis of program information on each channel, the OSD signal generation module 111 generates an OSD signal (third display information) to display a third program list shown in, for example, FIG. 4. Alternatively, on the basis of program information on each channel, the OSD signal generation module 111 generates an OSD signal (fourth display information) to display a fourth program list shown in, for example, FIG. 5.

For example, as shown in FIG. 2, the first program list includes a first amount of program information on each channel corresponding to a time range of 6 hours. For example, program information on one program included in the first program list includes a title and information on the contents of the program. The top line of the first program list includes the following items of information: images now being broadcasted on each channel, the channel number of each channel, the channel logo of each channel, and the channel name of each channel. The left end of the first program list includes two record bars. The two record bars show time zones for which the user has programmed recording on a program basis. Recording displayed by the two record bars is program-specified recording and differs from the multiple simultaneous video recording. The top right of the first program list includes the present time and date information (e.g., 5:13 p.m., Friday, October 11). In addition, the first program list displays the channel (e.g., channel 5, DDDTV) selected before the display of the first program list in distinction from the other channels. Furthermore, the first program list displays program information corresponding to a program viewed before the display of the first program list in distinction from the other program information. For example, program information corresponding to the viewed program includes broadcast time information on the program (e.g., 17:00 to 18:00), thereby displaying distinctively from the other program information.

As shown in FIG. 3, the horizontal and vertical size (overall size) of a second program list is the same as that of the first program list and includes a second amount (less than the first amount) of program information on each channel corresponding to a time range of 24 hours. For example, program information on one program included in the second program list includes all of the title if the title is relatively short and a part of the title if the title is relatively long. The top line of the second program list can include the same information as that included in the top line of the first program list. The left end and top right of the second program list can include the same information as that included in the left end and top right of the first program list.

As shown in FIG. 4, the horizontal and vertical size (overall size) of a third program list is the same as that of the first program list and includes a third amount (less than the second amount) of program information on each channel corresponding to a time range of about 2 days (about 48 hours). For example, program information on one program included in the third program list is represented by an icon showing the genre of the program. When the icon cannot be displayed on the third program list, "..." is displayed to indicate that the icon has been omitted. The top line of the third program list can include the same information as that included in the top line of the first program list. The top right of the third program list can include the same information as that included in the top right of the first program list.

As shown in FIG. 5, the horizontal and vertical size (overall size) of a fourth program list is the same as that of the first program list and includes a frame for each channel corresponding to a time range of 8 days. The top line of the fourth program list can include the same information as that included in the top line of the first program list. The top right of the fourth program list can include the same information as that included in the top right of the first program list.

For example, when the user presses a program list button provided on the remote controller 116, the remote controller 116 transmits a control signal (or a program information list display instruction) corresponding to the pressing of the program list button. The controller 110 then controls the OSD signal generation module 111 on the basis of the control signal (or program information list display instruction) received via the receiving unit 117. With this control, the OSD signal generation module 111 generates an OSD signal (first display information) for displaying the first program list and outputs the signal to the image display unit 141 via the graphic processing module 112 and video processing module 113. As a result, the image display unit 141 displays the first program list shown in FIG. 2.

With the first program list being displayed, when the user presses a red button among a plurality of color buttons provided on the remote controller 116, the remote controller 116 transmits a control signal (or a time range switching instruction) corresponding to the pressing of the red button and the controller 110 then controls the OSD signal generation module 111 on the basis of the control signal (or time range switching instruction) received via the receiving unit 117. With this control, the OSD signal generation module 111 generates an OSD signal (second display information) for displaying the second program list and outputs the signal to the image display unit 141 via the graphic processing module 112 and video processing module 113. As a result, the image display unit 141 displays the second program list shown in FIG. 3.

With the second program list being displayed, when the user presses the red button among the plurality of color buttons on the remote controller 116, the remote controller 116 transmits a control signal (or a time range switching instruction) corresponding to the pressing of the red button and the controller 110 then controls the OSD signal generation module 111 on the basis of the control signal (or time range switching instruction) received via the receiving unit 117. With this control, the OSD signal generation module 111 generates an OSD signal (third display information) for displaying the third program list and outputs the signal to the image display unit 141 via the graphic processing module 112 and video processing module 113. As a result, the image display unit 141 displays the third program list shown in FIG. 4.

With the third program list being displayed, when the user presses the red button among the plurality of color buttons on the remote controller 116, the remote controller 116 transmits a control signal (or a time range switching instruction) corresponding to the pressing of the red button and the controller 110 then controls the OSD signal generation module 111 on the basis of the control signal (or time range switching instruction) received via the receiving unit 117. With this control, the OSD signal generation module 111 generates an OSD signal (fourth display information) for displaying the fourth program list and outputs the signal to the image display unit 141 via the graphic processing module 112 and video processing module 113. As a result, the image display unit 141 displays the fourth program list shown in FIG. 5. That is, pressing the red button brings the image display unit 141 into a time-and-date-specified jump mode and causes the unit 141 to display the fourth program list. In the fourth program list, the vertical axis (time zone) of the third program list before the transition to the jump mode is compressed, thereby displaying a frame for 8 days in the future, including the present, on a single screen.

With the fourth program list being displayed, when the user presses the red button among the plurality of color buttons on the remote controller 116, the remote controller 116 transmits a control signal (or a time range switching instruction) corresponding to the pressing of the red button and the controller 110 then controls the OSD signal generation module 111 on the basis of the control signal (or time range switching instruction) received via the receiving unit 117. With this control, the OSD signal generation module 111 generates an OSD signal (first display information) for displaying the first program list and outputs the signal to the image display unit 141 via the graphic processing module 112 and video processing module 113. As a result, the image display unit 141 displays the first program list.

That is, the digital television broadcast receiver 1 can display the program list whose time range has been changed by pressing the red button. For example, the user can search for or ascertain a near-future program list on the basis of the first program list. Moreover, the user can search for or ascertain program information in the range from the near future to a little distant future on the basis of the second program list displayed by a simple operation. Furthermore, the user can search for or ascertain program information in the range from the near future to distant future on the basis of the second program list displayed by a simple operation.

Next, the cursor position display on the first, second, and third program lists will be explained. As shown in FIG. 2, in the first program list, program information corresponding to the program viewed before the display of the first program list is displayed distinctively from the other program information. For example, the cursor position display corresponds to program information corresponding to the program viewed before the display of the first program list. With the first program list being displayed, when the user presses a cursor button provided on the remote controller 116, the remote controller 116 transmits a control signal (or a cursor move instruction) corresponding to the pressing of the cursor button.

The controller 110 then controls the OSD signal generation module 111 on the basis of the control signal (cursor move instruction) received via the receiving unit 117. With this control, the OSD signal generation module 111 generates an OSD signal for switching the cursor position displays on a program basis and outputs the signal to the image display unit 141 via the graphic processing module 112 and video processing module 113. As a result, the cursor position display is switched on a program basis on the first program list.

As shown in FIG. 3, in the second program list, the cursor position display corresponds to a specific time zone unit corresponding to each channel. With the second program list being displayed, when the user presses the cursor button on the remote controller 116, the remote controller 116 transmits a control signal (or a cursor move instruction) corresponding to the pressing of the cursor button. The controller 110 then controls the OSD signal generation module 111 on the basis of the control signal (cursor move instruction) received via the receiving unit 117. With this control, the OSD signal generation module 111 generates an OSD signal for switching the cursor position displays in units of the specific time zone corresponding to each channel and outputs the signal to the image display unit 141 via the graphic processing module 112 and video processing module 113. As a result, the cursor position display is switched in units of the specific time zone corresponding to each channel on the second program list.

Similarly, on the third program list, the cursor position display is switched in units of the specific time zone corresponding to each channel.

As shown in FIG. 5, in the fourth program list, the cursor position display corresponds to a specific time zone unit corresponding to each channel. The cursor position display includes time information (e.g., 8:00 a.m. to 15:00 p.m.) corresponding to the cursor position. With the fourth program list being displayed, when the user presses the cursor button on the remote controller 116, the remote controller 116 transmits a control signal (or a cursor move instruction) corresponding to the pressing of the cursor button. The controller 110 then controls the OSD signal generation module 111 on the basis of the control signal (cursor move instruction) received via the receiving unit 117. With this control, the OSD signal generation module 111 generates an OSD signal for switching the cursor position displays in units of the specific time zone corresponding to each channel and outputs the signal to the image display unit 141 via the graphic processing module 112 and video processing module 113. As a result, the cursor position display is switched in units of the specific time zone corresponding to each channel on the fourth program list.

Furthermore, as shown in FIG. 5, with the cursor position display focusing on the 18th of the month, 8:00 a.m. to 15:00 p.m., when a Decide button on the remote controller 116 is pressed, a program list corresponding to the 18th, 8:00 a.m. to 15:00 p.m. (accurately, 8:00 a.m. to 15:59 p.m.) is reconfigured (displayed). In addition, with the cursor position display focusing on the 19th of the month, when a blue button on the remote controller 116 is pressed, the cursor position display focuses on the 18th (24 hours), the preceding day. In addition, with the cursor position display focusing on the 19th of the month, when the red button on the remote controller 116 is pressed, the cursor position display focuses on the 20th (24 hours), the following day.

For example, with the first, second, third, or fourth program list corresponding to terrestrial digital television broadcasting being displayed, when a Primary DBS button provided on the remote controller 116 is pressed, the first, second, third, or fourth program list corresponding to primary digital DBS television being relayed by a primary direct-broadcast satellite is displayed.

In addition, with the first, second, third, or fourth program list corresponding to primary digital DBS television being displayed, when a Terrestrial Digital button provided on the remote controller 116 is pressed, the first, second, third, or fourth program list corresponding to terrestrial digital television broadcasting is displayed.

Moreover, with the first, second, third, or fourth program list corresponding to terrestrial digital television broadcasting being displayed, when a Secondary DBS button provided on the remote controller 116 is pressed, the first, second, third, or fourth program list corresponding to secondary digital DBS television being relayed by a secondary direct-broadcast satellite is displayed.

Furthermore, with the first, second, third, or fourth program list corresponding to secondary digital DBS television being displayed, when the Terrestrial Digital button provided on the remote controller 116 is pressed, the first, second, third, or fourth program list corresponding to terrestrial digital television broadcasting is displayed.

Next, the upper limit of a time range included in each program list will be explained.

As described above, service information provided by digital television broadcasting includes program information on each channel for 8 days. This enables the first program list to include program information on each channel corresponding to a time range of 6 hours (less than 8 hours), the second program list to include program information on each channel corresponding to a time range of 24 hours (less than 8 days), and the third program list to include program information on each channel corresponding to a time range of 2 days (less than 8 days). The controller 110 controls the time ranges constituting a program list, with the number of days (8 days) of program information on each channel included in service information as the upper limit. In response to this, the OSD signal generation module 111 generates an OSD signal for displaying each program list.

For example, when service information includes only program information on each channel for one day, the OSD signal generation module 111, in response to this, generates an OSD signal for displaying the first program list including program information on each channel corresponding to a time range of 6 hours (less than one day), an OSD signal for displaying the second program list including program information on each channel corresponding to a time range of 12 hours (less than one day), or an OSD signal for displaying the third program list including program information on each channel corresponding to a time range of 24 hours (less than one day).

For example, when service information on television broadcasting includes program information on each channel for 8 days and service information on radio broadcasting includes program information on each channel for 3 days, the controller 110 controls the time ranges constituting a program list, with the number of days (8 or 3 days) of program information on each channel included in each item of service information. In response to this, the OSD signal generation module 111 generates a program list corresponding to television broadcasting for up to 8 days and a program list corresponding to radio broadcasting for up to 3 days.

With a conventional program list display, the user had no choice but to look at program information in the distant future using such functions as cursor movements and screen scrolling. Therefore, it was inconvenient to see a large number of items of program information for several days.

The digital television broadcast receiver 1 of the embodiment can change the time ranges constituting a program list by a simple operation. Therefore, the user can look at distant-future program information with a simple operation without depending only on such functions as cursor movements and screen scrolling. Furthermore, the digital television broadcast receiver 1 can move the cursor not only on a program basis but also on a time basis. The user can search for desired program information more quickly by moving the cursor on a time basis.

## Claims

1. A display control apparatus **characterized by** comprising:
a receiver (102, 103) configured to receive program information on each channel;
a display information output module (113) configured to output first display information for making a list display of a first amount of program information on each channel corresponding to a first time range or second display information for making a list display of a second amount of program information on each channel corresponding to a second time range; and
a display controller (110) configured to control the display information output module so that the display information output module outputs the first display information on the basis of a program information list display instruction and switch the output of the first display information from the display information output module to the output of the second display information on the basis of a time range switching instruction.

2. The apparatus of Claim 1, **characterized in that** the display controller is configured to switch the cursor position display outputs from the display information output module on a program basis or on a specific time zone basis corresponding to each channel in response to a cursor move instruction.

3. The apparatus of Claim 1, **characterized in that** the display controller is configured to switch the cursor position display outputs from the display information output module on a program basis in response to a cursor move instruction in a first list display corresponding to the first display information and on a specific time zone basis corresponding to each channel in response to a cursor move instruction in a second list display corresponding to the second display information.

4. The apparatus of Claim 3, **characterized in that** the display controller is configured to control the display information output module so that the display information output module outputs specific display information to make a list display of program information on each channel using the specific time zone as a time range in response to a cursor position decide instruction in a state where the cursor position is displayed on the specific time zone basis.

5. The apparatus of Claim 1, **characterized in that** the display controller is configured to switch the output of the second display information from the display information output module to the output of third display information for making a list display of a third amount of program information on each channel corresponding to a third time range on the basis of an instruction to switch the time ranges in a second list display corresponding to the second display information.

6. The apparatus of Claim 1, **characterized in that** the display controller is configured to control the first time range of the first display information and the second time range of the second display information output from the display information output module, with the number of days of program information on each channel received by the receiver as the upper limit.

7. The apparatus of Claim 1, **characterized in that** the receiver includes a plurality of tuners for receiving a broadcast signal on each channel.

8. The apparatus of Claim 7, **characterized in that** the display controller is configured to control the display information output module so that the display information output module outputs the first display information including images now being broadcasted on each channel and the second display information including images now being broadcasted on each channel.

9. A display control method **characterized by** comprising:
outputting first display information for making a list display of a first amount of program information on each channel corresponding to a first time range on the basis of a program information list display instruction; and
switching the output of the first display information to the output of second display information for making a list display of a second amount of program information on each channel corresponding to a second time range on the basis of a time range switching instruction.
